# FASCICULE DE BREVET EUROPEEN

(11) **EP 2 636 291 B1**
(45) Date de publication et mention de la délivrance du brevet: **02.09.2020**
(21) Numéro de dépôt: 13158050.8
(22) Date de dépôt: 06.03.2013
(51) Int. Cl.: A01B 71/02, A01C 7/20

(54) **Dispositif de fixation auto réglable d'un équipement au châssis d'un semoir**
Selbstregulierende Befestigungsvorrichtung einer Ausstattung auf dem Fahrgestell einer Sämaschine
Device for self-adjusting fastening of a device to the frame of a seed drill

(30) Priorité: 08.03.2012 FR 1252125
(43) Date de publication de la demande: 11.09.2013
(73) Titulaire: Ribouleau Monosem, 79240 Largeasse (FR)
(72) Inventeur: Bergere, Caroline, 79300 Bressuire (FR)
(74) Mandataire: Vidon Brevets & Stratégie

(56) Documents cités:
- WO-A1-03/096785
- WO-A2-2010/091469
- AU-A1- 2005 200 890
- US-A- 5 685 246

## Description

### 1. Domaine de l'invention

Le domaine de l'invention est celui de la conception et de la fabrication des semoirs.

Plus précisément, l'invention concerne un dispositif de fixation d'un équipement au châssis d'un semoir.

### 2. Art antérieur

Les semoirs sont classiquement mis en œuvre par des agriculteurs pour ensemencer des surfaces cultivables.

Les semoirs comprennent généralement un châssis auquel sont solidarisés divers équipements.

Au rang de ces équipements figurent notamment des moyens de liaison au sol par l'intermédiaire desquels le châssis repose sur le sol.

De manière générale, un élément de liaison au sol est constitué de tout composant par l'intermédiaire duquel le châssis est relié au sol.

Les moyens de liaison au sol comprennent généralement des trains roulants dont la mise en œuvre permet de déplacer le semoir sur une surface cultivable ou non.

Les moyens de liaison au sol comprennent également au moins un élément semeur de graines. Un élément semeur peut par exemple permettre d'assurer une distribution des graines à l'unité selon un pas prédéterminé. Il peut dans ce cas s'agir de semoirs à enterrage à disques tels que ceux commercialisés par la Demanderesse sous le nom de *NG plus 4*. Un tel semoir comprend un bâti portant des roues de jauge reposant sur le sol, et des disques ouvreurs entre lesquels est placé un distributeur pneumatique de graines relié à un réservoir de graines. Il s'agit d'un élément semeur à disques. Les disques ouvreurs permettent de former un sillon dans la surface à ensemencer dont la profondeur peut être réglée selon la position de roues de jauge. Les graines s'écoulent par gravité depuis le réservoir jusque dans le distributeur pneumatique. Celui-ci les dépose à l'unité selon un pas prédéterminé au fond du sillon préalablement formé. Les disques ouvreurs permettant de créer le sillon peuvent être remplacés par un soc, il s'agit alors d'un élément semeur à soc.

L'élément semeur comprend en outre des moyens pour assurer la fermeture du sillon après que les graines ont été déposées au fond de celui-ci. Ces moyens de fermeture de sillon peuvent par exemple comprendre une paire de roues amenés à rouler de part et d'autre du sillon de façon à recouvrir de terre les graines préalablement déposées dans celui-ci..

Les équipements solidarisés au semoir comprennent en outre généralement des fertiliseurs qui permettent de déposer des produits fertilisants à proximité des graines devant être déposées ou d'ores et déjà déposées dans un sillon. Les fertiliseurs comprennent un réservoir ou une trémie contenant du fertilisant, qui peut par exemple se présenter sous la forme de grains ou d'un liquide. Ils comprennent également un bâti portant des moyens de diffusion du fertilisant. Les fertiliseurs sont également la plupart du temps associés à un enfouisseur dont la mise en œuvre permet de mettre en terre le fertilisant. L'enfouisseur peut comprendre une paire de disques entre lesquels débouche un canal de distribution du fertilisant. Il s'agit d'enfouisseur à double-disques. Il peut alternativement comprendre au moins un soc. Il s'agit alors d'enfouisseur à socs. Les enfouisseurs constituent donc des moyens de liaison au sol.

D'autres équipements et accessoires peuvent être solidarisés au châssis d'un semoir, comme par exemple des trémies, des passerelles, des boîtes de vitesses, des moyens d'éclairage ou autre.

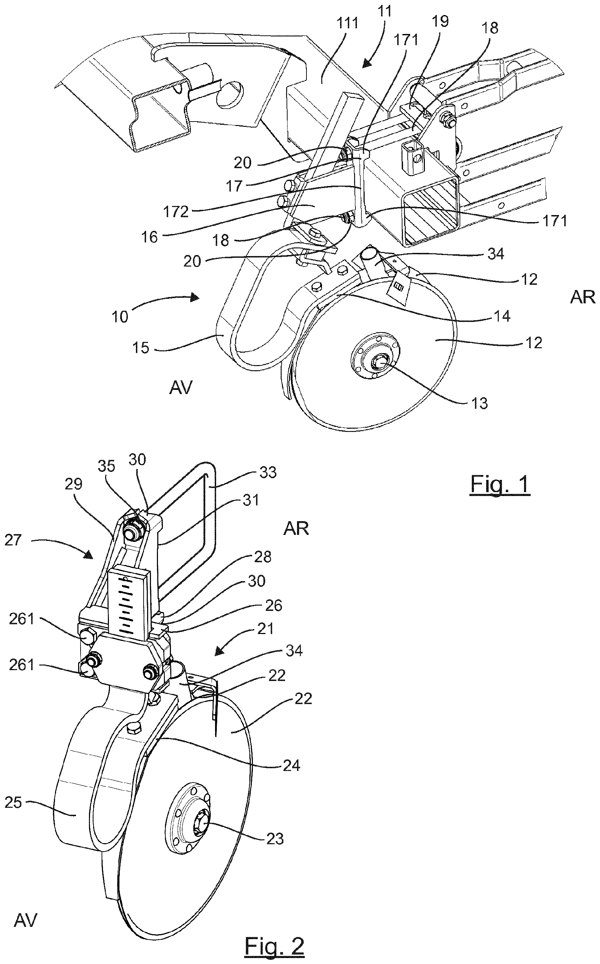

Les équipements, en l'occurrence les enfouisseurs à disques, sont habituellement fixés au châssis au moyen de brides. La figure 1 illustre à titre d'exemple l'assemblage d'un enfouisseur à disques 10 et d'un châssis 11 de semoir.

Dans le cas illustré à la figure 1, l'enfouisseur 10 comprend deux disques d'enfouissement 12. Les disques 12 sont espacés l'un de l'autre et montés mobiles en rotation sur un moyeu 13 solidaire d'un bâti 14. L'espace qui les sépare à l'arrière AR des disques est plus important que l'espace qui les sépare à l'avant AV des disques. L'enfouisseur comprend un canal de distribution 34 de fertilisant en grains qui est placé entre les disques 12. Le bâti 14 est relié à une extrémité d'une lame ressort 15. L'autre extrémité de la lame ressort 15 est reliée à une platine 16 qui comprend une bride 17. La bride 17 comprend deux extrémités distales 171 entre lesquelles est délimité un logement 172. Le logement 172 présente une forme complémentaire de la partie de châssis 111 auquel l'enfouisseur 10 doit être solidarisé. Les extrémités distales 171 sont chacune traversées par un trou à travers lequel peut être passée l'extrémité d'une tige de fixation 18. L'autre extrémité de la tige de fixation 18 est solidaire d'une autre bride 19 placée de l'autre côté de la partie de châssis 111. Cette bride 19 comprend également un logement de forme complémentaire de celle de la partie de châssis 111.

La solidarisation de l'enfouisseur 10 au châssis 11 du semoir est obtenue en enserrant la partie de châssis 111 entre les brides 17 et 19. Les brides 17 et 19 forment ainsi une sorte de mâchoire dans laquelle est enserrée la partie de châssis 111. Pour cela, les brides 17, 19 sont rapprochées l'une de l'autre en vissant un écrou 20 à l'extrémité de chaque tige 18. Une autre dispositif de fixation de ce genre est connu de US 5 685 246. Ici, il est possible d'adapter la fixation verticalement à différentes tailles de châssis au moyen d'un élément supplémentaire. La bride cependant est faite d'une seule pièce plate.

La mise en œuvre d'une telle technique permet d'assurer une solidarisation efficace d'un enfouisseur au châssis d'un semoir. Elle présente néanmoins quelques inconvénients.

### 3. Inconvénients de l'art antérieur

Compte tenu des tolérances sur les dimensions des parties de châssis, qui sont généralement constitués par des poutrelles à profils normalisées, et sur les dimensions des logements qui sont ménagés dans les brides, il peut arriver que la forme de ces derniers ne soit pas parfaitement adaptée à celle de la partie de châssis que les brides sont destinées à enserrer. Il peut donc exister un espace entre les contours de ces logements et ceux de la partie de châssis. Dans ce cas, la forme des brides n'est plus véritablement complémentaire de celle de la partie de châssis. L'assemblage des brides et de la partie de châssis n'est alors pas parfaitement ajusté.

Toutefois, le niveau de serrage entre les brides et la partie de châssis est tel que l'enfouisseur est généralement convenablement solidarisé à la partie de châssis.

Il peut néanmoins arriver que cela ne soit pas le cas et qu'un jeu existe entre la partie de châssis et les brides.

Par ailleurs, compte tenu des efforts auxquels est soumis l'enfouisseur alors qu'il est déplacé sur le sol par exemple au cours d'une opération de distribution de fertilisant, les brides peuvent au fil du temps se déplacer par rapport à la partie de châssis et des jeux entre les deux peuvent apparaître et/ou s'accentuer.

Le positionnement de l'enfouisseur par rapport au châssis doit être précis. En effet, le canal de distribution de l'enfouisseur doit déposer le produit fertilisant à une certaine distance de la ligne de graines sans quoi le fertilisant perd de son efficacité. Pourtant, du fait de tels jeux, l'enfouisseur peut se déplacer de la position dans laquelle il est supposé être placé par rapport au châssis. Il en résulte que la ligne de dépôt du produit fertilisant peut s'éloigner ou se rapprocher de la ligne de graines dans des proportions telles que l'efficacité du fertilisant peut être réduite. Le développement des graines peut alors être perturbé.

L'existence de tels jeux peut en outre être à l'origine d'une usure prématurée de l'équipement et/ou des brides et/ou de la partie de châssis.

Lorsque l'équipement est un train roulant ou élément semeur, ces jeux peuvent encore induire une réduction de la précision dans la distribution des graines. On comprend en effet que de part l'existence de tels jeux, l'élément semeur peut se déplacer par rapport au châssis en sorte que la trajectoire suivie par ses moyens de distribution peut être différente de celle qu'ils devraient en principe suivre.

### 4. Objectifs de l'invention

L'invention a notamment pour objectif de pallier ces inconvénients de l'art antérieur.

Plus précisément, un objectif de l'invention est de fournir un dispositif de fixation d'un enfouisseur à un châssis de semoir qui permet, dans au moins un mode de réalisation, de fixer de manière efficace et pérenne cet enfouisseur au châssis d'un semoir de manière telle qu'une distribution précise de fertilisant soit assurée afin que son efficacité soit optimale.

Un autre objectif de l'invention est de fournir, dans au moins un mode de réalisation de l'invention, un tel dispositif de fixation qui permet d'assurer une solidarisation convenable d'un enfouisseur à un châssis d'un semoir en dépit des tolérances sur les dimensions des moyens de fixation mis en œuvre à cet effet et/ou sur celles du châssis.

L'invention a encore pour objectif de procurer, dans au moins un mode de réalisation, un tel dispositif qui soit simple à utiliser.

Notamment, l'invention poursuit l'objectif de fournir un tel dispositif de fixation qui permet, dans au moins un mode de réalisation, de combler automatiquement les variations de dimensions des moyens de fixation et/ou du châssis lors de l'assemblage d'un enfouisseur et d'un châssis.

L'invention à encore pour objectif de fournir, dans au moins un mode de réalisation, un tel dispositif de fixation qui soit polyvalent, c'est-à-dire qui puisse permettre de solidariser à un châssis de semoir tout type d'équipements et d'accessoires susceptibles d'être fixés au châssis d'un semoir.

Un autre objectif de l'invention est de fournir un tel dispositif qui soit, dans au moins un mode de réalisation, simple de conception et/ou robuste et/ou fiable et/ou bon marché.

### 5. Exposé de l'invention

Ces objectifs, ainsi que d'autres qui apparaîtront par la suite, sont atteints selon l'invention à l'aide d'un dispositif de fixation d'un équipement à un châssis de semoir, ledit dispositif comprenant les caractéristiques de la revendication 1.

Ainsi, l'invention repose sur une approche tout à fait originale qui consiste à mettre en œuvre, dans un dispositif de fixation par bride(s) d'un équipement, comme par exemple un enfouisseur, à un châssis de semoir, des moyens pour adapter la taille de la ou des brides à celle du châssis.

Il est ainsi possible de combler les variations de dimensions de la ou des brides et/ou du châssis ou d'une partie de celui-ci en sorte que la ou les brides épousent convenablement la forme du châssis. On évite alors l'apparition de jeux entre les moyens de fixation par bride(s) et le châssis. La solidarisation d'un équipement à un châssis est ainsi convenablement assurée et pérenne.

Lorsque l'équipement est un enfouisseur comprenant des moyens de distribution de fertilisant comme un canal, la position de l'enfouisseur par rapport au châssis est donc fixe et précise en sorte que le fertilisant est distribué avec une grande précision ce qui garantit que son efficacité est optimale.

L'absence de jeu entre les moyens de fixation par bride(s) et le châssis conduit à prévenir une usure prématurée des moyens de fixation par bride(s) et/ou du châssis du semoir.

Lorsque l'équipement est un élément semeur, la fiabilité et la précision de la distribution des graines est améliorée du fait que la position du distributeur de graines est stable.

Selon une caractéristique préférentielle de l'invention, lesdits moyens d'adaptation sont conçus pour adapter automatiquement la taille dudit logement à celle dudit châssis lorsque ladite bride est serrée contre ledit châssis au moyen desdits moyens de solidarisation.

Dans ce cas, une simple action consistant à solidariser un équipement à un châssis en agissant sur les moyens de solidarisation conduit à adapter la taille de la bride à celle du châssis. Les moyens d'adaptation sont donc de type auto réglable. Ils sont ainsi particulièrement simples à utiliser pour l'opérateur oeuvrant à la solidarisation d'un équipement. Ceci contribue également à améliorer la précision et la fiabilité de l'assemblage.

Selon l'invention, ladite bride comprend deux portions de brides comprenant chacune une extrémité distale délimitant entre-elles ledit logement de ladite bride, lesdites portions de bride étant mobiles l'une par rapport à l'autre entre au moins une position de desserrage dans laquelle lesdites extrémités distales sont éloignées et au moins une position de serrage dans laquelle lesdites extrémités distales sont rapprochées.

Il est ainsi possible de faire varier la taille du logement de la bride pour l'adapter à celle du châssis en faisant simplement passer les portions de bride mobiles de l'une à l'autre de leurs positions.

Dans ce cas, lesdites portions de brides passent avantageusement de leur position de desserrage à leur position de serrage lors du serrage desdits moyens de solidarisation.

L'ajustement de la taille de la bride à celle du châssis est alors obtenu de manière simple en procédant au serrage des moyens de solidarisation de la bride au châssis.

Les portions de bride pourront par exemple être mobiles en rotation l'une par rapport à l'autre. Elles pourront également être mobiles en translation l'une par rapport à l'autre.

Selon un mode de réalisation particulier de l'invention, lesdits moyens de solidarisation comprennent au moins une tige courbée autour dudit châssis et dont chaque extrémité est filetée et reliée à une des extrémités distales de ladite bride au moyen d'au moins un écrou.

Ceci permet d'assurer une solidarisation efficace d'un équipement au châssis de manière simple et économique en ne mettant en œuvre qu'une seule bride. L'auto adaptation de la taille de la bride à celle du châssis est simplement obtenue en serrant les écrous.

Selon un autre mode de réalisation particulier, un dispositif selon l'invention comprend au moins une paire de brides destinées à être placées de part et d'autre dudit châssis pour enserrer celui-ci, chaque extrémité distale d'une bride placée d'un côté dudit châssis étant reliée à une extrémité distale de la bride placée de l'autre côté dudit châssis par lesdits moyens de solidarisation.

Cette mise en œuvre permet d'assurer une solidarisation plus robuste d'un équipement à un châssis. Il peut être recouru à cette solution technique en particulier lorsque l'équipement est destiné à subir des efforts plus importants compte tenu des conditions d'utilisation du semoir.

Dans ce cas, il peut optionnellement être prévu qu'une seule desdites brides comprend deux portions de bride mobiles.

Ceci peut permettre d'obtenir une solidarisation convenable à un coût plus réduit. Il pourra également être prévu que chacune des brides comprend deux portions de brides, ce qui permet d'améliorer encore davantage la précision de l'assemblage de l'équipement et du châssis.

Lorsqu'une paire de brides sera mise en œuvre, lesdits moyens de solidarisation pourront avantageusement comprendre au moins une paire de tiges, chacune desdites tiges comprenant une extrémité solidaire d'une desdites extrémités distales d'une desdites brides et une autre extrémité filetée solidaire d'une extrémité distale de l'autre desdites brides au moyen d'un écrou.

Cette solution permet d'assurer de manière simple et efficace une liaison entre les brides placées de part et d'autre du châssis et d'assurer une auto adaptation de la taille d'au moins une bride à celle du châssis en serrant les écrous.

Ledit équipement pourra être un train roulant.

Au sens de l'invention un train roulant est un organe comprenant au moins une roue sur laquelle repose le semoir en vue d'être déplacé sur le sol.

Ledit équipement pourra être un équipement de semoir appartenant au groupe comprenant notamment :
- les dispositifs de distribution de graines ;
- les fertiliseurs ;
- les enfouisseurs à disques ;
- les enfouisseurs à socs ;
- les dispositifs d'éclairage ;
- les trémies ;
- les passerelles ;
- les boîtes de vitesses ;
- les marchepieds.

De façon générale, un dispositif selon l'invention peut permettre de solidariser tout équipement et accessoire susceptible d'être fixé au châssis d'un semoir.

L'invention concerne également un engin agricole comprenant au moins un châssis et au moins un équipement solidarisé audit châssis au moyen d'un dispositif de fixation selon l'une quelconque des variantes mentionnées précédemment.

L'engin agricole sera préférentiellement un semoir.

### 6. Liste des figures

D'autres caractéristiques et avantages de l'invention apparaîtront plus clairement à la lecture de la description suivante de modes de réalisation préférentiels, donnés à titre de simples exemples illustratifs et non limitatifs, et des dessins annexés, parmi lesquels :
- la figure 1 illustre une vue en perspective d'un dispositif de fixation d'un équipement à une partie de châssis selon l'art antérieur ;
- la figure 2 illustre une vue en perspective d'un dispositif de fixation selon l'invention comprenant une bride ;
- la figure 3 illustre une vue de côté d'un dispositif de fixation selon l'invention comprenant une paire de brides ;
- la figure 4 illustre une variante d'un dispositif de fixation selon l'invention comprenant plusieurs paires de brides ;
- la figure 5 illustre la solidarisation de deux équipements à une partie châssis ;
- la figure 6 illustre une vue éclatée en perspective de l'assemblage de deux portions d'une bride selon l'invention.

### 7. Description de modes de réalisation de l'invention

### 7.1. Rappel du principe général de l'invention

Le principe général de l'invention repose sur la mise en œuvre, dans un dispositif de fixation par bride(s) d'un équipement à un châssis de semoir, de moyens pour adapter la taille de la ou des brides à celles du châssis.

Les variations de dimensions de la ou des brides et/ou du châssis peuvent ainsi être comblées en sorte que la ou les brides s'adaptent convenablement la forme du châssis.

Cette solution contribue notamment à :
- éviter l'apparition de jeux entre les moyens de fixation par bride(s) et le châssis ;
- assurer une solidarisation fiable et pérenne d'un équipement au châssis ;
- prévenir une dégradation prématurée des moyens de fixation par bride(s) et/ou du châssis du semoir.

Ainsi, lorsque l'équipement comprend des moyens de distribution de fertilisant, la mise en œuvre de l'invention permet d'assurer une distribution précise de fertilisant et d'optimiser en conséquence l'efficacité de celui-ci.

De manière plus générale, la mise en œuvre d'un dispositif selon l'invention permet de réaliser une fixation optimale d'un équipement au châssis d'un semoir.

### 7.2. Dispositif à une bride

### 7.2.1. Architecture

On présente, en relation avec la figure 2, un mode de réalisation d'un dispositif de fixation d'un équipement au châssis d'un semoir selon l'invention.

Dans ce mode de réalisation, le dispositif de fixation comprend une unique bride et permet la solidarisation d'un équipement constitué d'un enfouisseur à disques. Dans des variantes, il pourra permettre la solidarisation d'un autre type d'équipement.

L'enfouisseur 21 comprend deux disques 22 espacés l'un de l'autre de telle sorte que la distance qui les sépare à l'arrière AR des disques est supérieure à la distance qui les sépare à l'avant AV des disques. Les disques 22 sont montés mobiles en rotation sur un moyeu 23 solidaire d'un bâti 24. Le bâti 24 est relié à une extrémité d'une lame ressort 25. L'autre extrémité de la lame ressort 25 est reliée à une platine 26. Dans des variantes, des moyens d'amortissement autres qu'une lame ressort pourront être mis en œuvre, comme par exemple un ressort à spirale. Le montage des disques pourra également être rigide, c'est-à-dire sans moyens d'amortissement.

La platine 26 est solidarisée à une bride 27 au moyen de deux vis 261. La bride comprend donc des moyens de solidarisation d'un équipement. Dans ce mode de réalisation, ils comprennent des trous taraudés 61. Dans une variante, la platine pourra être formée d'un seul tenant avec la bride. D'autres moyens de solidarisation pourront également être mis en œuvre.

L'enfouisseur 21 comprend un canal 34 de distribution de fertilisant en grains placé entre les disques 22. Ce canal 34 est relié à des moyens d'alimentation en fertilisant (non représentés). Dans une variante, le fertilisant pourra être liquide.

La bride 27 comprend deux portions de bride 28, 29. Elle comprend deux extrémités distales 30. Chacune des portions de bride 28, 29 comprend une de ces extrémités distales 30.

La bride 27 comprend un logement 31 dont deux bords opposés sont délimités par les extrémités distales 30.

Le logement 31 présente une forme complémentaire d'une partie de châssis 32 auquel l'enfouisseur 21 doit être solidarisé.

Dans ce mode de réalisation, la partie de châssis 32 présente une section carrée. Le logement 31 définit alors ici sensiblement un « U ». Dans des variantes, la partie de châssis 32 pourra présenter une section différente. La forme du logement 31 sera choisie en conséquence.

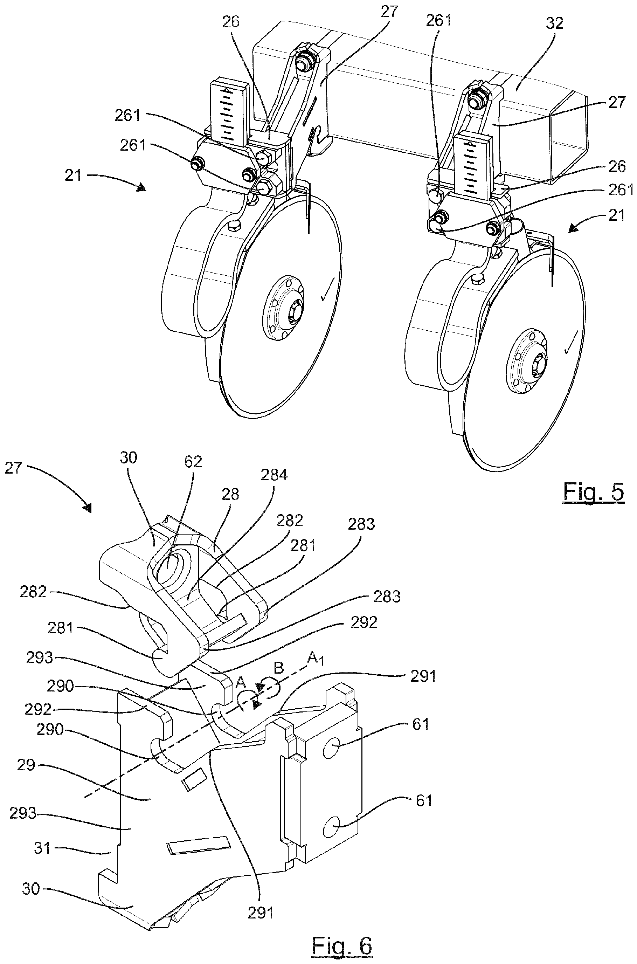

Les extrémités distales 30 sont chacune traversées par un trou 62 (seul le trou ménagé dans la portion de bride 28 est représenté sur la figure 6) à travers lequel peut être passée une extrémité d'une tige de fixation 33.

Dans ce mode de réalisation, la tige de fixation 33 est courbée en sorte qu'elle peut enserrer la partie de châssis 32 avec la bride 27 en épousant sensiblement la forme de celui-ci. Cette tige 33 présente donc dans ce mode de réalisation essentiellement la forme d'un « U ». Chaque extrémité de la tige 33 présente une portion filetée sur laquelle peut être vissé un écrou 35.

Les portions de bride 28, 29 sont mobiles l'une par rapport à l'autre entre :
- une position de serrage dans laquelle les extrémités distales 30 sont rapprochées, et
- une position de desserrage dans laquelle les extrémités distales 30 sont plus éloignées.

Pour cela, les portions de bride 28, 29 sont dans ce mode de réalisation liées entre elles au moyen d'une liaison pivot.

La première portion de bride 29 comprend dans ce mode de réalisation deux logements 290 dont le contour est en partie circulaire. Le contour des logements 290 est ouvert sur une rampe d'accès 291 qui débouche à l'intérieur de chaque logement 290.

La deuxième portion de bride 28 comprend dans ce mode de réalisation deux doigts 281. Le contour des doigts 281 est prévu pour coopérer avec les logements 290. Ils présentent donc un contour en partie circulaire.

Les première 29 et deuxième 28 portions de bride présentent des surfaces d'appui 282, 292 destinées à venir en contact l'une contre l'autre.

Les portions de bride 28 et 29 sont assemblées l'une à l'autre en introduisant les doigts 281 de la deuxième portion 28 dans les logements 290 de la première portion 29 via les rampes 291. Une fois que les doigts 281 sont logés dans ces logements 290, les première 29 et deuxième 28 portions de bride sont liées par une liaison pivot en sorte qu'elle sont mobiles en rotation l'une par rapport à l'autre autour d'un axe A1 passant essentiellement par les centres du contour en partie circulaire des doigts 281 et des logements 290. Les premières 29 et deuxième 28 portions de bride peuvent ainsi tourner l'une par rapport à l'autre autour de cet axe A1 selon les flèches A et B . La distance séparant les deux extrémités distales 30 peut ainsi être augmentée ou réduite en fonction du sens selon lequel les portions de bride sont pivotées l'une par rapport à l'autre.

La deuxième portion de bride 28 comprend une portion formant butée 284. Lorsque les première 29 et deuxième 28 portions de bride coopèrent l'une avec l'autre, la butée 284 se trouve entre les faces latérales 293 de la première portion de bride 29 en sorte qu'un mouvement latéral de la deuxième portion de bride 28 par rapport à la première 29 est empêché.

Les surfaces d'appui 282, 292 limitent le débattement des portions de brides l'une par rapport à l'autre selon la flèche B. Des éléments formant saillie 283 s'étendent à l'arrière de la portion de bride 28. Ils sont prévus pour venir en appui contre des butées ménagées à l'arrière de la portion de bride 29. Les éléments formant saillie et les butées limitent le débattement des portions de brides l'une par rapport à l'autre selon la flèche A.

### 7.2.2. Mise en œuvre

Pour solidariser l'enfouisseur 21 à la partie de châssis 32 du semoir, la deuxième portion de bride 28 est assemblée avec la première portion de bride 29 en faisant coopérer les doigts 281 avec les logements 290. La bride 27 est ensuite appliquée contre un côté de la partie de châssis 32 de manière telle que celui-ci soit placé à l'intérieur du logement 31 prévu à cet effet. Les portions de bride 28, 29 sont alors pivotées l'une par rapport à l'autre selon la flèche A ou B pour permettre l'introduction de la partie de châssis 32 dans le logement 31. La tige 33 est ensuite glissée autour de la partie de châssis 32 depuis l'autre côté de celui-ci, c'est-à-dire depuis le côté opposé au côté contre lequel la bride 27 est appliquée.

Les extrémités de la tige 33 sont introduites dans les trous ménagés à cet effet aux extrémités distales 30 de la bride 27. Un écrou 35 est vissé à chaque extrémité de la tige 33.

L'assemblage final de l'enfouisseur 21 à la partie de châssis 32 est obtenu en serrant les écrous 35. Au fur et à mesure que les écrous 35 sont serrés, les portions de bride 28, 29 pivotent selon la flèche B autour de l'axe de la liaison pivot qui les relit en sorte que les extrémités distales 30 de la bride 27 sont rapprochées et viennent en appui contre le bord des deux autres côtés opposés de la partie de châssis 32. Au cours du serrage, la distance séparant les deux extrémités distales 30 s'ajuste à l'épaisseur de la partie de châssis 32. Il n'existe donc pas de jeu entre la bride 27 et la partie de châssis 32 contre lequel elle est assemblée.

### 7.3. Dispositif à deux brides

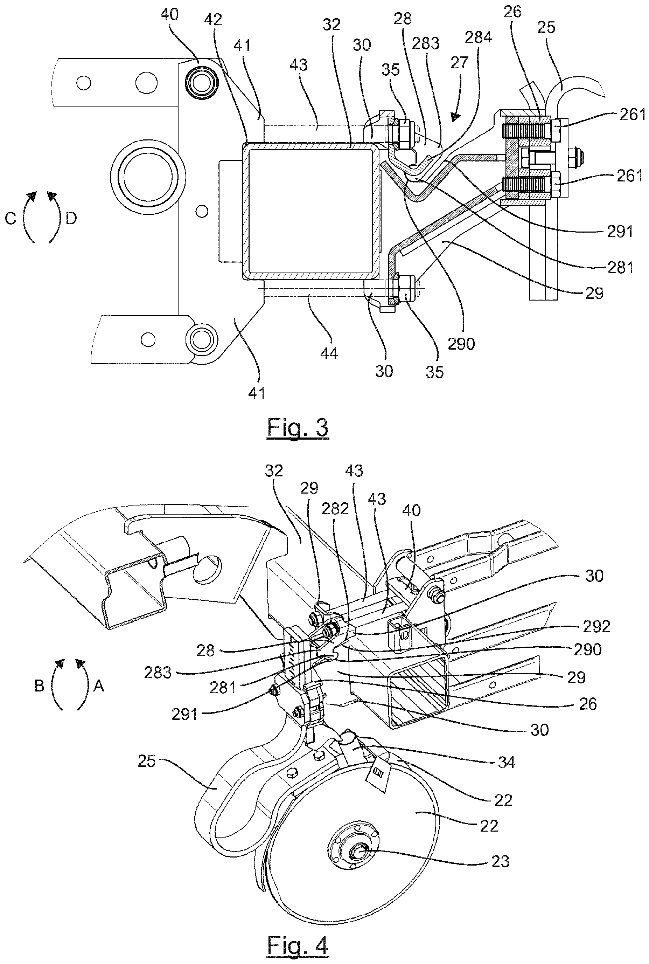

Dans la variante illustrée à la figure 3, le dispositif de solidarisation selon l'invention comprend non plus une unique bride 27, mais une paire de brides. Les brides 27 et 40 sont alors placées en applique de part et d'autre de la partie de châssis respectivement contre des côtés opposés de celui-ci.

La bride 40 est différente de la bride 27 du fait qu'elle ne comprend pas deux portions de bride mobiles l'une par rapport à l'autre. Au contraire, la bride 40 est formée d'un seul tenant. Elle comprend deux extrémités distales 41 qui délimitent les bords opposés d'un logement 42 de forme complémentaire de celle de la partie de châssis 32.

Les extrémités distales des brides 40, 27 sont reliées deux à deux par des tiges 43, 44. Une extrémité de chaque tige 43, 44 est solidarisée à la bride 40, préférentiellement à rotation de manière à pouvoir pivoter selon les flèches C et D dans un plan essentiellement parallèle aux faces latérales des brides. L'autre extrémité de chaque tige 43, 44 passe à travers les trous ménagés à cet effet à travers les extrémités distales 30 de la bride 27. Elles sont solidarisées à cette bride 27 au moyen d'écrous 35 vissés sur les extrémités filetées des tiges 43, 44.

Dans une variante (non illustrée), les brides placées de part et d'autre de la partie de châssis 32 pourront être identiques à la bride 27.

### 7.4. Variantes

Dans des variantes, un équipement pourra être solidarisé au châssis avec plusieurs dispositifs de fixation comme celui illustré à la figure 2. Dans ce cas, plusieurs brides placées préférentiellement successivement d'un même côté d'une partie du châssis permettront d'assembler l'équipement à la partie de châssis avec un nombre correspondant de tiges courbées 33.

Dans d'autres variantes, un équipement pourra être solidarisé à un châssis avec plusieurs dispositifs de fixation comme celui décrit en relation avec la figure 3. Dans ce cas, plusieurs brides placées successivement d'un même côté d'une partie de châssis permettront d'assembler l'équipement à la partie de châssis avec un nombre correspondant de brides placées de l'autre côté. Plusieurs paires de brides seront alors mises en œuvre.

Les variantes mettant en œuvre plusieurs dispositifs de solidarisation pourront permettre de solidariser de manière plus robuste des équipements à un châssis. Ces variantes peuvent en particulier être mises en œuvre lorsque les équipements sont susceptibles d'encaisser des efforts plus importants au cours de l'utilisation du semoir.

Dans les modes de réalisation décrits plus haut, la portion de bride comprenant les doigts est la portion supérieure, c'est-à-dire celle qui se trouve être la plus éloignée du sol. Elle pourra alternativement être la portion inférieure, c'est-à-dire celle qui se trouve le plus près du sol. Lorsque plusieurs brides ou paires de brides seront mises en œuvre, la position des portions de bride ayant des doigts pourra alternativement se trouver en haut ou en bas comme cela est représenté sur la figure 4.

L'équipement pourra être solidarisé de manière déportée par rapport à la bride d'un côté ou de l'autre de celle-ci, comme cela est plus clairement représenté sur la figure 5. Un dispositif de fixation selon l'invention est donc réversible.

L'équipement pourra également être solidarisé de manière telle qu'il s'étende devant ou derrière le châssis.

L'avant et l'arrière sont définis en fonction du sens d'avancement du semoir. Une partie avant est donc orientée vers la destination du semoir alors qu'une partie arrière est orientée à l'opposée.

## Revendications

1. Dispositif de fixation d'un équipement (21) à un châssis (32) de semoir, ledit dispositif comprenant au moins une bride (27) comprenant un logement (31) de forme complémentaire dudit châssis (32), et des moyens de solidarisation (33) liés à chacune des extrémités de ladite bride (27), ladite au moins bride (27) et lesdits moyens de solidarisation (33, 35) étant destinés à enserrer ledit châssis (32),
**caractérisé en ce que** ladite bride (27) comprend deux portions de brides (28, 29) comprenant chacune une extrémité distale (30) délimitant entre-elles ledit logement (31) de ladite bride (27), lesdites portions de bride (28, 29) étant mobiles l'une par rapport à l'autre entre au moins une position de desserrage dans laquelle lesdites extrémités distales (30) sont éloignées et au moins une position de serrage dans laquelle lesdites extrémités distales (30) sont rapprochées, de sorte à adapter la taille dudit logement (31) à celle dudit châssis (32).

2. Dispositif selon la revendication 1, **caractérisé en ce que** lesdits moyens d'adaptation sont conçus pour adapter automatiquement la taille dudit logement (31) à celle dudit châssis (32) lorsque ladite bride (27) est serrée contre ledit châssis (32) au moyen desdits moyens de solidarisation (33, 35).

3. Dispositif selon la revendication 1, **caractérisé en ce que** lesdites portions de brides (28, 29) passent de leur position de desserrage à leur position de serrage, lors du serrage desdits moyens de solidarisation (33, 35).

4. Dispositif selon l'une quelconque des revendications 1 à 3, **caractérisé en ce que** lesdits moyens de solidarisation comprennent au moins une tige courbée (33) autour dudit châssis (32) et dont chaque extrémité est filetée et reliée à une des extrémités distales (30) de ladite bride (27) au moyen d'au moins un écrou (35).

5. Dispositif selon l'une quelconque des revendications 1 à 3, **caractérisé en ce qu'**il comprend au moins une paire de brides (27, 40) destinées à être placées de part et d'autre dudit châssis (32) pour enserrer celui-ci, chaque extrémité distale (30, 41) d'une bride (27, 40) placée d'un côté dudit châssis (32) étant reliée à une extrémité distale (30, 41) de la bride (27, 40) placée de l'autre côté dudit châssis (32) par lesdits moyens de solidarisation (43, 44, 35).

6. Dispositif selon la revendication 5, **caractérisé en ce qu'**une seule desdites brides (27) comprend deux portions de bride mobiles (28, 29).

7. Dispositif selon l'une quelconque des revendications 5 ou 6, **caractérisé en ce que** lesdits moyens de solidarisation comprennent au moins une paire de tiges (43, 44), chacune desdites tiges (43, 44) comprenant une extrémité solidaire d'une desdites extrémités distales (41) d'une desdites brides (40) et une autre extrémité filetée solidaire d'une extrémité distale (30) de l'autre desdites brides (27) au moyen d'un écrou (35).

8. Dispositif selon l'une quelconque des revendications 1 à 7, **caractérisé en ce que** ledit équipement appartient au groupe comprenant :
- les dispositifs de distribution de graines;
- les fertiliseurs ;
- les enfouisseurs à disques (21) ;
- les enfouisseurs à socs ;
- les trains roulants ;
- les dispositifs d'éclairage ;
- les trémies ;
- les passerelles ;
- les boîtes de vitesses ;
- les marchepieds.

9. Engin agricole comprenant au moins un châssis et au moins un équipement solidarisé audit châssis au moyen d'un dispositif de fixation selon l'une quelconque des revendications 1 à 8.

## Patentansprüche

1. Vorrichtung zur Befestigung einer Ausrüstung (21) an einem Rahmen (32) einer Sämaschine, wobei die Vorrichtung wenigstens einen Flansch (27), der eine Aufnahme (31) mit einer zum Rahmen (32) komplementären Form umfasst, und mit jedem der Enden des Flansches (27) verbundene Befestigungsmittel (33) umfasst, wobei der wenigstens eine Flansch (27) und die Befestigungsmittel (33, 35) dazu bestimmt sind, den Rahmen (32) zu umspannen,
**dadurch gekennzeichnet, dass** der Flansch (27) zwei jeweils ein distales Ende (30) umfassende Flanschabschnitte (28, 29) umfasst, die zwischen sich die Aufnahme (31) des Flansches (27) begrenzen, wobei die Flanschabschnitte (28, 29) relativ zueinander zwischen wenigstens einer Löseposition, in welcher die distalen Enden (30) voneinander entfernt sind, und wenigstens einer Spannposition, in welcher die distalen Enden (30) aneinander angenähert sind, beweglich sind, um die Größe der Aufnahme (31) an diejenige des Rahmens (32) anzupassen.

2. Vorrichtung nach Anspruch 1, **dadurch gekennzeichnet, dass** die Anpassungsmittel dafür ausgelegt sind, automatisch die Größe der Aufnahme (31) an diejenige des Rahmens (32) anzupassen, wenn der Flansch (27) mittels der Befestigungsmittel (33, 35) gegen den Rahmen (32) verspannt wird.

3. Vorrichtung nach Anspruch 1, **dadurch gekennzeichnet, dass** die Flanschabschnitte (28, 29) beim Spannen der Befestigungsmittel (33, 35) von ihrer Löseposition in ihre Spannposition übergehen.

4. Vorrichtung nach einem der Ansprüche 1 bis 3, **dadurch gekennzeichnet, dass** die Befestigungsmittel wenigstens eine um den Rahmen (32) gekrümmte Stange (33) umfassen, von der jedes Ende mit einem Gewinde versehen und mit einem der distalen Enden (30) des Flansches (27) mittels wenigstens einer Mutter (35) verbunden ist.

5. Vorrichtung nach einem der Ansprüche 1 bis 3, **dadurch gekennzeichnet, dass** sie wenigstens ein Paar Flansche (27, 40) umfasst, die dazu bestimmt sind, beiderseits des Rahmens (32) angeordnet zu werden, um diesen zu umspannen, wobei jedes distale Ende (30, 41) eines auf einer Seite des Rahmens (32) angeordneten Flansches (27, 40) mit einem distalen Ende (30, 41) des auf der anderen Seite des Rahmens (32) angeordneten Flansches (27, 40) durch die Befestigungsmittel (43, 44, 35) verbunden ist.

6. Vorrichtung nach Anspruch 5, **dadurch gekennzeichnet, dass** nur einer der Flansche (27) zwei bewegliche Flanschabschnitte (28, 29) umfasst.

7. Vorrichtung nach einem der Ansprüche 5 oder 6, **dadurch gekennzeichnet, dass** die Befestigungsmittel wenigstens ein Paar Stangen (43, 44) umfassen, wobei jede der Stangen (43, 44) ein Ende, das mit einem der distalen Enden (41) eines der Flansche (40) fest verbunden ist, und ein anderes, mit einem Gewinde versehenes Ende, das mit einem distalen Ende (30) des anderen der Flansche (27) mittels einer Mutter (35) fest verbunden ist, umfasst.

8. Vorrichtung nach einem der Ansprüche 1 bis 7, **dadurch gekennzeichnet, dass** die Ausrüstung zu der Gruppe gehört, welche umfasst:
- die Vorrichtungen zur Ausbringung von Samen;
- die Düngerstreuer;
- die Scheibeneinleger (21);
- die Schareinleger;
- die Fahrwerke;
- die Beleuchtungsvorrichtungen;
- die Trichter;
- die Laufstege;
- die Getriebe;
- die Trittbretter.

9. Landwirtschaftliches Gerät, welches wenigstens einen Rahmen und wenigstens eine Ausrüstung, die mit dem Rahmen mittels einer Vorrichtung zur Befestigung nach einem der Ansprüche 1 bis 8 fest verbunden ist, umfasst.

## Claims

1. Device for attaching equipment (21) to a chassis (32) of a feeder, the said device comprising at least one bracket (27) comprising a housing (31) of a shape that complements the said chassis (32), and securing means (33) which are connected to each of the ends of the said bracket (27), the said at least one bracket (27) and the said securing means (33, 35) being intended to clamp the said chassis (32),
**characterized in that** the said bracket (27) comprises two bracket portions (28, 29) each comprising a distal end (30) between them delimiting the said housing (31) of the said bracket (27), the said bracket portions (28, 29) being able to move relative to one another between at least an unclamped position in which the said distil ends (30) are distant and at least a clamped position in which the said distal ends (30) are closer together, so as to adapt the size of the said housing (31) to that of the said chassis (32).

2. Device according to Claim 1, **characterized in that** the said adjusting means are designed to automatically adjust the size of the said housing (31) to suit that of the said chassis (32) when the said bracket (27) is clamped against the said chassis (32) by means of the said securing means (33, 35).

3. Device according to Claim 1, **characterized in that** the said bracket portions (28, 29) pass from their unclamped position to their clamped position when the said securing means (33, 35) are tightened.

4. Device according to any one of Claims 1 to 3, **characterized in that** the said securing means comprise at least one rod (33) curved around the said chassis (32) and each end of which is threaded and connected to one of the distil ends (30) of the said bracket (27) by means of at least one nut (35).

5. Device according to any one of Claims 1 to 3, **characterized in that** it comprises at least one pair of brackets (27, 40) which are intended to be positioned on either side of the said chassis (32) in order to clamp same, each distil end (30, 41) of a bracket (27, 40) positioned on one side of said chassis (32) being connected to a distal end (30, 41) of the bracket (27, 40) positioned on the other side of the said chassis (32) via the said securing means (43, 44, 35).

6. Device according to Claim 5, **characterized in that** just one of the said brackets (27) comprises two mobile bracket portions (28, 29).

7. Device according to either one of Claims 5 and 6, **characterized in that** the said securing means comprise at least a pair of rods (43, 44), each of the said rods (43, 44) having one end secured to one of the said distal ends (41) of one of the said brackets (40) and a threaded other end secured to a distal end (30) of the other of the said brackets (27) by means of a nut (35).

8. Device according to any one of Claims 1 to 7, **characterized in that** the said equipment belongs to the group comprising:
- seed distribution devices;
- fertilizers;
- disc-type earthing-over devices (21);
- share-type earthing-over devices;
- running gear;
- lighting devices;
- hoppers;
- walkways;
- gearboxes;
- foot plates.

9. Agricultural implement comprising at least a chassis and at least an item of equipment secured to the said chassis by means of a fixing device according to any one of Claims 1 to 8.
